Europäisches Patentamt

European Patent Office

Office européen des brevets

(19)

(11) **EP 0 789 840 B1**

(12) **EUROPÄISCHE PATENTSCHRIFT**

(45) Veröffentlichungstag und Bekanntmachung des Hinweises auf die Patenterteilung:
**25.08.1999  Patentblatt 1999/34**

(21) Anmeldenummer: 95935825.0

(22) Anmeldetag: 30.10.1995

(51) Int Cl.6: **G01N 27/00**, G01R 1/18

(86) Internationale Anmeldenummer:
**PCT/DE95/01508**

(87) Internationale Veröffentlichungsnummer:
**WO 96/13714 (09.05.1996 Gazette 1996/21)**

(54) **STROM-SPANNUNGSWANDLER ZUR ERFASSUNG EINES TUNNELSTROMS EINES RASTERTUNNELMIKROSKOPS**

CURRENT/VOLTAGE TRANSFORMER FOR THE DETECTION OF THE ELECTRON CURRENT IN A SCANNING TUNNELLING-ELECTRON MICROSCOPE

TRANSFORMATEUR D'INTENSITE/DE TENSION POUR DETECTER LE COURANT A EFFET TUNNEL D'UN MICROSCOPE A EFFET TUNNEL

(84) Benannte Vertragsstaaten:
**CH FR GB LI**

(30) Priorität: 31.10.1994  DE 4438960
31.10.1994  DE 4447538

(43) Veröffentlichungstag der Anmeldung:
**20.08.1997  Patentblatt 1997/34**

(73) Patentinhaber: **FORSCHUNGSZENTRUM JÜLICH GMBH**
**52425 Jülich (DE)**

(72) Erfinder:
• **SZOT, Krzysztof**
**PL-40-086 Katowice (PL)**
• **OTTO, Ralph**
**B-4721 Kelmis (BE)**
• **HERION, Jörg**
**D-52428 Jülich (DE)**

(56) Entgegenhaltungen:
EP-A- 0 480 645  US-A- 3 769 513
US-A- 4 454 481  US-A- 4 880 975
US-A- 5 298 748  US-A- 5 329 155

**Beschreibung**

Die Erfindung bezieht sich auf einen Strom-Spannungswandler, der zur Erfassung des Tunnelstroms eines Rastertunnelmikroskops dient. Der Tunnelstrom fließt zwischen Tunnelspitze des Rastertunnelmikroskops und Probenoberfläche. Der Strom-Spannungswandler weist zur Strommessung Operationsverstärker und einen im Tunnelstrompfad liegenden Rückkopplungswiderstand auf.

Bei Rastertunnelmikroskopen wird zur Abtastung der Struktur der Probenoberfläche zwischen der Tunnelspitze des Rastertunnelmikroskops und der Probenoberfläche ein konstanter Tunnelstrom eingestellt. Bei einer Rasterbewegung der Tunnelspitze in geringem Abstand über der Probenoberfläche wird der Tunnelstrom durch Änderung der z-Position der Tunnelspitze auf den vorgegebenen Sollwert nachgeregelt. Als z-Richtung wird die Richtung senkrecht zur Probenoberfläche bezeichnet. Diese Positionsänderungen der Tunnelspitze geben die Struktur der Probenoberfläche wieder. Man erhält Oberflächentopographien bis hin zu atomarer Auflösung.

Abweichend dazu läßt sich die Probenoberfläche mit dem Rastertunnelmikroskop auch spektroskopisch untersuchen. Bei der "Spektroskopie" wird bei abgeschalteter Positionsregelung der Tunnelspitze in z-Richtung (z = const.) gearbeitet und der Tunnelstrom in Abhängigkeit von der Tunnelspannung gemessen: dabei wird die Tunnelspannung in der Regel stufenförmig verändert und bei jeder Stufe der Tunnelstrom erfaßt.

Eine weitere Anwendung des Rastertunnelmikroskops bezieht sich auf die Messung der Höhe einer lokalen elektrischen Potentialbarriere. Bei dieser Anwendung ist die Messung eines kleinen Wechselstromanteils des Tunnelstroms bei Frequenzen im Bereich von 10 bis 50 kHz erforderlich.

Zur Messung des zwischen Tunnelspitze und Probenoberfläche jeweils fließenden Tunnelstroms ist es bekannt, als Strom-Spannungswandler Operationsverstärker einzusetzen, die über hochohmige Eingänge verfügen und mit entsprechend hohen elektrischen Widerständen gegengekoppelt sind. Ein solcher Widerstand bildet mit seinen Streukapazitäten Tiefpässe, die die Übertragungsfrequenzen nach oben beschränken. In gleicher Weise wirkt die bei herkömmlichen Strom-Spannungswandlern unvermeidliche Eingangskapazität. Es lassen sich maximale Übertragungsfrequenzen nur im Kilohertz(kHz)-Bereich erreichen. Höhere Übertragungsfrequenzen sind jedoch insbesondere zur Bestimmung elektrischer Potentialbarrieren und zur Verkürzung der Meßzeiten bei gleichbleibender Auflösungsqualität erforderlich.

In US-A-5298748 wird ein Infrarot-Tunnel-Sensor bechrieben, bei dem die Verformung einer Membran von einer Tunnelspitze kontrolliert wird. Auf Streukapazitäten, die die Auflösung der zu messenden Werte beeinträchtigen, kommt es hierbei jedoch nicht an.

Aus US-A-4454481 ist ein Verstärker mit geringen parasitären Streukapazitäten und erweiterter Bandbreite bekannt, wobei der Rückkopplungswiderstand von einem geerdeten leitfähigen Schirm umgeben ist. Dabei wirken die Streukapazitäten zusammen mit dem Rückkopplungswiderstand als Tiefpässe, die bei einem Stromspannungswandler den Frequenzgang beeinflussen.

Aufgabe der Erfindung ist es, einen Strom-Spannungswandler zu schaffen, dessen parasitäre Kapazitäten weitgehend kompensiert sind, und dessen Übertragungsfrequenz damit erheblich gesteigert wird.

Diese Aufgabe wird bei einem Strom-Spannungswandler der eingangs genannten Art durch die im Patentanspruch 1 angegebenen Merkmale gelöst. Danach ist dem Operationsverstärker ein Elektrometerverstärker vorgeschaltet, mit dessen Ausgang eine schwimmende Abschirmung für den Tunnelstrompfad verbunden ist. Der Rückkopplungswiderstand ist von einem Äquipotentialschirm umgeben. Der als Spannungsfolger eingesetzte hochohmige Elektrometerverstärker mit schwimmender Abschirmung für den zur Tunnelstromspitze geführten Tunnelstrompfad bewirkt eine Reduktion der Eingangskapazität des Strom-Spannungswandlers. Durch die zusätzliche Äquipotentialabschirmung des Rückkopplungswiderstandes durch Einbetten in einen niederohmigen Widerstand läßt sich der Einfluß der Streukapazität des Rückkopplungswiderstandes merklich reduzieren. Patentanspruch 2.

Der den Rückkopplungswiderstand elektrisch isoliert umgebende Äquipotentialschirm wird auf dem Isolationsmaterial (z.B. Keramik, Lackschicht, Kunststoffolie) durch Umwickeln, Besprühen, Bedampfen, Aufsputtern oder elektrolytisches Abscheiden von elektrisch leitendem Material wie Metallegierungen oder Kohlenstoffverbindungen (z. B. Graphit) gebildet. Die bisher erreichbare Obergrenze der Übertragungsfrequenz läßt sich mit solchen von Äquipotentialschirmen umgebenen Rückkopplungswiderständen um 1 bis 2 Zehnerpotenzen auf über 100 kHz steigern.

Um das Einschwingverhalten und damit den Frequenzgang des Strom-Spannungswandlers zu optimieren, ist der Operationsverstärker mit einem RC-Glied und einer einstellbaren Rückkopplung versehen, wie sie im Patentanspruch 3 angegeben ist.

Bei vielen Anwendungsfällen, z.B. wenn die Probe geheizt, gekühlt oder bestrahlt wird, ist es vorteilhaft, die Probe auf Massepotential und die Tunnelspannung an die Tunnelspitze zu legen, was gemäß Patentanspruch 4 bevorzugt durch Anheben des Schaltungsnullpunkts für den Strom-Spannungswandler inclusive der Betriebsspannungen für den Elektrometerverstärker und den Operationsverstärker geschieht.

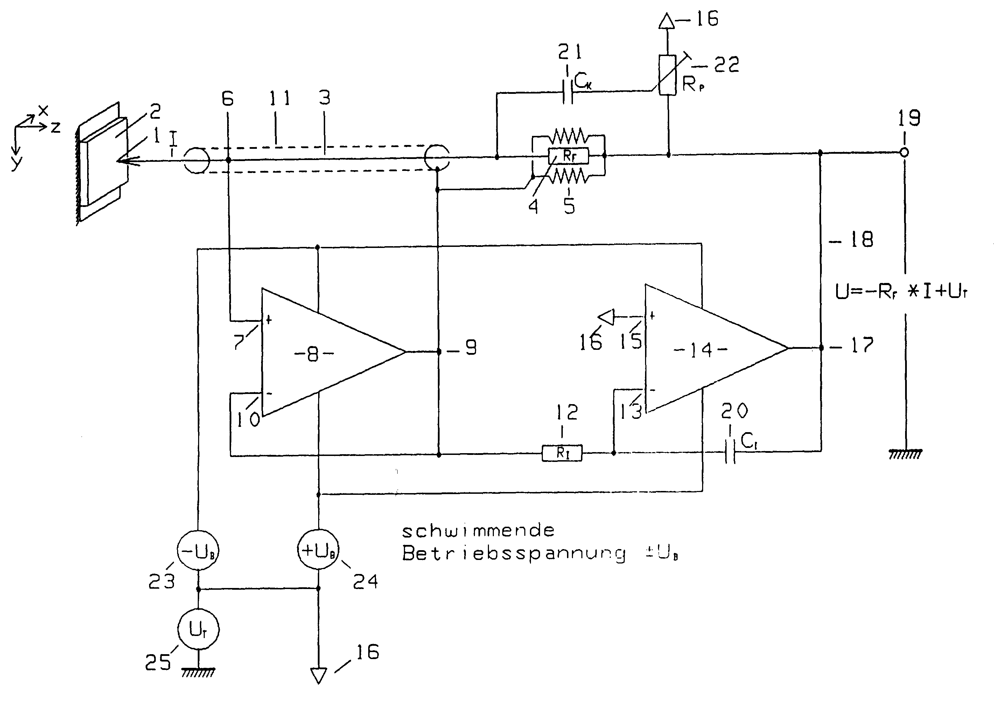

Die Erfindung wird nachfolgend anhand eines Ausführungsbeispiels näher erläutert. Die Zeichnung zeigt einen Strom-Spannungswandler für ein Rastertunnelmikroskop.

# EP 0 789 840 B1

Schematisch ist in der Zeichnung eine Tunnelspitze 1 dargestellt, die relativ zur Oberfläche einer Probe 2 bewegbar ist. Der von der Probe 2 in die Tunnelspitze 1 fließende Tunnelstrom I gelangt über einen Tunnelstrompfad 3 zum Rückkopplungswiderstand $R_F$, 4, der von einem Äquipotentialschirm 5 umgeben ist. Im Ausführungsbeispiel ist der Äquipotentialschirm durch Besprühen eines als Isolator um den Rückkopplungswiderstand 4 gelegten Glas- oder Keramik-Röhrchens mit einer Graphitteilchen enthaltenden Emulsion hergestellt worden. Als Isolatorschicht sind auch auf dem Rückkopplungswiderstand aufgetragene Lackschichten oder Kunststofffolien geeignet. Möglich ist es auch, den Widerstandsdraht des Rückkopplungswiderstandes isoliert in ein Rohr aus elektrisch leitendem Material einzusetzen.

Die an der Tunnelspitze 1 anliegende Spannungsänderung wird über einen am Tunnelstrompfad 3 befindlichen Abgriff 6 an einen nichtinvertierenden Eingang 7 eines Elektrometerverstärkers 8 gelegt. Der Elektrometerverstärker 8, der durch Verbinden seines Ausgangs 9 mit seinem invertierenden Eingang 10 als Spannungsfolger arbeitet, stellt eine mit seinem Ausgang 9 verbundene, schwimmende Abschirmung 11 für den Tunnelstrompfad 3 auf annähernd das gleiche Potential ein, das der innerhalb der Abschirmung verlaufende Tunnelstrompfad 3 besitzt. Die Kapazität zwischen Tunnelstrompfad 3 und Abschirmung 11 bleibt damit ohne Einfluß. Die Abschirmung selbst eliminiert die ansonsten zwischen Tunnelstrompfad und Umgebung (Masse) auftretende Streukapazität.

Der Ausgang 9 des Elektrometerverstärkers 8 ist mit dem Äquipotentialschirm 5 des Rückkopplungswiderstandes 4 verbunden, so daß der Einfluß der Streukapazität des Rückkopplungswiderstands erheblich reduziert wird.

Über einen Widerstand $R_I$, 12, der einen invertierenden Eingang 13 eines Operationsverstärkers 14 mit dem Ausgang 9 des Elektrometerverstärkers 8 verbindet, gelangt die an der Tunnelspitze 1 auftretende Spannungsänderung auch an den Operationsverstärker 14. Dessen nichtinvertierender Eingang 15 liegt auf Schaltungsnullpunkt 16. Der Operationsverstärker 14 weist eine hohe Leerlaufverstärkung auf und ändert die an seinem Ausgang 17 anliegende Spannung aufgrund dieser Leerlaufverstärkung und aufgrund einer über den Rückkopplungswiderstand $R_F$, 4, geschlossenen Regelschleife (die Regelschleife wird vom Ausgang 17 über eine Verbindungsleitung 18 zum Tunnelstrompfad 3 und über den Rückkopplungswiderstand 4 und den Abgriff 6 und den nichtinvertierenden Eingang 7 des Elektrometerverstärkers 8 geschlossen) derart, daß die Differenz der Eingangsspannungen zwischen seinem invertierenden Eingang 13 und seinem nichtinvertierenden Eingang 15 nahezu Null wird.

Dies ist dann der Fall, wenn die Ausgangsspannung des Elektrometerverstärkers 8 und damit auch die Spannung an der Tunnelspitze 1 gleich der Tunnelspannung $U_T$ ist. Dann ist die am Ausgang 17 des Operationsverstärkers 14 und damit auch die am Ausgang 19 des gesamten Strom-Spannungswandlers auftretende Spannung U gleich dem Produkt aus Tunnelstrom I und Rückkopplungswiderstand $R_F$ plus der Tunnelspannung $U_T$.

$$U = - R_F * I + U_T \cdot$$

Zur Optimierung des Einschwingverhaltens bzw. zur Korrektur des Frequenzganges des Strom-Spannungswandlers werden zwei Maßnahmen getroffen:

a) Der Operationsverstärker 14 wird durch ein RC-Glied mit Widerstand $R_I$, 12, und Kondensator $C_I$, 20, als Tiefpaß geschaltet, wobei der Widerstand $R_I$ die Verbindung zwischen Ausgang 9 des Elektrometerverstärkers 8 und invertierendem Eingang 13 des Operationsverstärkers 14 bildet.

b) Mit dem Tunnelstrompfad 3 ist ein Kondensator $C_K$, 21, verbunden, der über ein Potentiometer $R_P$, 22, kontinuierlich zwischen zwei Betriebsarten eingestellt werden kann:

1. Integrierend -         Der Kondensator $C_K$, 21, liegt parallel zum Rückkopplungswiderstand $R_F$, 4.
2. Differenzierend -      Der Kondensator $C_K$, 21, leitet einen Teil der Tunnelstromänderung I gegen den Schaltungsnullpunkt 16 ab.

Für den Betrieb von Elektrometerverstärker 8 und operationsverstärker 14 ist eine schwimmende Betriebsspannung $\pm U_B$ mit Spannungsgebern 23, 24, für $+U_B$, $-U_B$ vorgesehen, wobei der Betriebsspannung mit Spannungsgeber 25 jeweils die Tunnelspannung $U_T$ aufgeschaltet ist. An beiden Verstärkern, also sowohl am Elektrometerverstärker 8 als auch am Operationsverstärker 14 liegt die gleiche Betriebsspannung $\pm U_B$ an.

Im Ausführungsbeispiel wird als Operationsverstärker 14 ein schneller, niederohmiger OP37 (3 MHz, $10^7$ Ohm) und als Elektrometerverstärker 8 ein hochohmiger AD515 ($10^{15}$ Ohm) eingesetzt. Die Betriebsspannung $\pm U_B$ beträgt $\pm 6$ Volt. Der Widerstandswert des Rückkopplungswiderstandes $R_F$, 4, beträgt 10 MOhm, der Widerstandswert des Äquipotentialschirms 5 beträgt 10 KOhm.

Das RC-Glied mit Widerstand $R_I$, 12, und Kondensator $C_I$, 20, hat einen Widerstand von 1 KOhm und eine Kapazität von 1 nF. Die Kapazität des Kondensators $C_K$, 21, beträgt 1 pF und der Widerstandswert des Potentiometers

$R_p$, 22, beträgt 10 KOhm.

Als Übertragungsfrequenz wird beim Strom-Spannungswandler im Ausführungsbeispiel als oberer Grenzwert eine Frequenz von 100 KHz bei einer Empfindlichkeit von 10 pA erreicht.

**Patentansprüche**

1. Strom-Spannungswandler zur Erfassung eines zwischen Tunnelspitze und Probenoberfläche fließenden Tunnelstroms eines Rastertunnelmikroskops mit Operationsverstärkern und einem im Tunnelstrompfad liegenden Rückkopplungswiderstand,
   **dadurch gekennzeichnet,** daß einem schnellen, niederohmigen Operationsverstärker (14) ein Elektrometerverstärker (8) vorgeschaltet ist, der ausgangsseitig (9) mit einer schwimmenden Abschirmung (11) für den Tunnelstrompfad (3) verbunden ist, und daß der Rückkopplungswiderstand (4) mit einem Äquipotentialschirm (5) umgeben ist.

2. Strom-Spannungwandler nach Anspruch 1
   **dadurch gekennzeichnet,** daß der Rückkopplungswiderstand (4) zur Äquipotentialabschirmung elektrisch isoliert in einen niederohmigen Widerstand eingebettet ist.

3. Strom-Spannungswandler nach Anspruch 1 oder 2,
   **dadurch gekennzeichnet,** daß das Einschwingverhalten des Strom-Spannungswandlers durch ein Zeitglied $R_l C_l$ (12, 20) mit einem zwischen Ausgang (9) des Elektrometerverstärkers (9) und invertierendem Eingang (13) des Operationsverstärkers (14) eingesetztem Widerstand $R_l$ (12) und einem zwischen invertierendem Eingang (13) und Ausgang (17) des Operationsverstärkers (14) zwischengeschaltetem Kondensator $C_l$ (20) und durch eine einstellbare Rückkopplung $R_p C_k$ mit einem am Tunnelstrompfad (3) angeschlossenen und mit dem Schaltungsnullpunkt (16) verbundenen Potentiometer $R_p$ (22) und einem dem Rückkopplungswiderstand 4 parallel geschalteten Kondensator CK (21) optimierbar ist, der am Tunnelstrompfad (3) und am Regler des Potentiometers $R_p$ (22) angreift.

4. Strom-Spannungswandler nach Anspruch 1, 2 oder 3,
   **dadurch gekennzeichnet** daß die Probe (2) auf Massepotential liegt und die Tunnelspitze (1) die Tunnelspannung $U_T$ führt, wobei der Schaltungsnullpunkt auf die Tunnelspannung $U_T$ angehoben ist.

**Claims**

1. Current-to-voltage converter for registering a tunnel current flowing between the tunnel point and the surface of the specimen on a scanning tunnel microscope having operational amplifiers and a feedback resistor situated in the path of the tunnel current,
   characterised in that connected on the line side of a fast, low-resistance operational amplifier (14) is an electrometer amplifier (8) which on the output side (9) is connected to a floating screen (11) for the tunnel current path (3), and that the feedback resistor (4) is surrounded by an equipotential screen (5).

2. Current-to-voltage converter according to claim 1, characterised in that for equipotential screening, the feedback resistor (4) is embedded in an electrically insulated manner in a low-value resistor.

3. Current-to-voltage converter according to claim 1 or 2, characterised in that the transient response of the current-to-voltage converter is adapted to be optimised by a timing element $R_l C_l$ (12, 20) with a resistor $R_l$ (12) deployed between the output (9) of the electrometer amplifier (8) and the inverting input (13) of the operational amplifier (14) and with a capacitor $C_l$ (20) interconnected between the inverting input (13) and output (17) of the operational amplifier (14) and by an adjustable feedback $R_p C_k$ with a potentiometer $R_p$ (22) connected at the tunnel current path (3) and wired to the common return (16) and with a capacitor CK (21) shunted with the feedback resistor (4), said capacitor CK (21) acting on the tunnel current path (3) and on the regulator of the potentiometer $R_p$ (22).

4. Current-to-voltage converter according to claim 1, 2 or 3, characterised in that the specimen (2) is at frame potential and the tunnel point (1) carries the tunnel voltage $U_T$, the common return being raised to the tunnel voltage $U_T$.

**Revendications**

1. Transducteur courant-tension de détection d'un courant par effet tunnel d'un microscope par effet tunnel, qui passe entre la pointe tunnel et la surface d'un échantillon, ayant des amplificateurs opérationnels et une résistance de réaction se trouvant dans le trajet du courant par effet tunnel, caractérisé en ce qu'il est prévu en amont d'un amplificateur (14) opérationnel rapide et à basse valeur ohmique, un amplificateur (8) électrométrique qui est relié du côté (9) de la sortie à un blindage (11) flottant pour le trajet (8) de courant par effet tunnel, et en ce que la résistance (4) de couplage est entourée d'un écran (5) équipotentiel.

2. Transducteur courant-tension suivant la revendication 1, caractérisé en ce que la résistance (4) de réaction est enrobée dans une résistance de basse valeur ohmique en étant isolée électriquement par rapport à l'écran équipotentiel.

3. Transducteur courant-tension suivant la revendication 1 ou 2, caractérisé en ce que le comportement en régime transitoire du transducteur courant-tension peut être optimisé par un relais temporisateur $R_I C_I$ (12, 20) ayant une résistance $R_I$ (12) insérée entre la sortie (9) de l'amplificateur (9) électrométrique et l'entrée (13) inverseuse de l'amplificateur (14) opérationnel et un condensateur $C_I$ (20) interposé entre l'entrée (13) inverseuse et la sortie (17) de l'amplificateur (14) opérationnel, et par un couplage de réaction $R_P C_K$ réglable ayant un potentiomètre $R_P$ (22) raccordé au trajet(3) de courant par effet tunnel et relié au point neutre (16) du circuit et un condensateur CK (21) monté en parallèle à la résistance (4) de réaction, et attaquant le trajet (3) de courant par effet tunnel et le régulateur du potentiomètre $R_P$ (22).

4. Transducteur courant-tension suivant les revendications 1, 2 ou 3, caractérisé en ce que l'échantillon (2) est au potentiel de masse et la pointe tunnel (1) applique la tension par effet tunnel $U_T$, le point neutre du circuit étant porté à la tension $U_T$ par effet tunnel.

$U = -R_f * I + U_r$

schwimmende Betriebsspannung $\pm U_B$